# EUROPÄISCHE PATENTANMELDUNG

(11) **EP 3 650 504 A1**
(43) Veröffentlichungstag der Anmeldung: **13.05.2020**
(21) Anmeldenummer: 18205120.1
(22) Anmeldetag: 08.11.2018
(51) Int. Cl.: C09D 5/00

(54) **KORROSIONSSCHUTZZUSAMMENSETZUNG BASIEREND AUF ALKYDHARZEN**

(71) Anmelder: SIKA TECHNOLOGY AG, 6340 Baar (CH)
(72) Erfinder: Schulze, Georg, 70197 Stuttgart (DE)
(74) Vertreter: Sika Patent Attorneys

(57) **Zusammenfassung**

Die vorliegende Erfindung betrifft Korrosionsschutzzusammensetzung umfassend Alkydharze, Korrosionsschutzpigmente, wobei es sich um plättchenförmige Korrosionsschutzpigmente und/oder aktive Korrosionsschutzpigmente handelt, Trockenstoffe sowie Microsphären und/oder Benzolkohlenwasserstoffharze.

Diese Korrosionsschutzzusammensetzungen verfügen über eine verbesserte Leistungsfähigkeit bei anspruchsvollen Korrosionstests auf Metallsubstraten.

## Beschreibung

### Technisches Gebiet

Die Erfindung betrifft eine Korrosionsschutzzusammensetzung basierend auf Alkydharzen, welche als Beschichtung, insbesondere als Schutzbeschichtung für Metalloberflächen im Hochbau oder in industriellen Anlagen einsetzbar ist.

### Stand der Technik

Flüssig applizierbare Korrosionsschutzzusammensetzungen basierend auf Alkydharzen, welche als Beschichtungen oder Anstriche eingesetzt werden, sind seit längerem Stand der Technik.

Ein grosses Problem der gängigen Korrosionsbeschichtungen basierend auf Alkydharzen ist ihre ungenügende Leistungsfähigkeit bei anspruchsvollen Korrosionstests auf Metallsubstraten, insbesondere in der "Beständigkeit gegen Salzsprühnebel" nach DIN EN ISO 9227 NSS oder in der "Beständigkeit gegen Feuchtigkeit" nach DIN EN ISO 6270-1, speziell im Gitterschnitt-Test.

Phenol-Formaldehydharze werden beispielsweise beschrieben in der DE 2038768 für die Verwendung in wässrigen Lacken, welche nach dem Elektrotauchlackierverfahren zum Einsatz kommen. Beschrieben wird dort ein wasserverdünnbares Polykondensat aus Fettsäureestern, Phenol-Formaldehydharz, Maleinsäureanhydrid und Polybutadienöl.

Phenol-Formaldehydharze werden weiter beschrieben in der EP 0 270 795 für die Verwendung einer wässrigen Bindemittelzusammensetzung als Grundierung für den Korrosionsschutz von metallischen und nicht metallischen Gegenständen. Beschrieben ist eine wasserverdünnbare oxidativ vernetzende carboxylierte Polybutadien-Zusammensetzung enthaltend nicht-wassermischbares Phenolharz.

Es besteht daher der Bedarf an Korrosionsbeschichtungen basierend auf Alkydharzen, welche eine verbesserte Leistungsfähigkeit bei anspruchsvollen

Korrosionstests auf Metallsubstraten, insbesondere in der "Beständigkeit gegen Salzsprühnebel" nach DIN EN ISO 9227 NSS oder in der "Beständigkeit gegen Feuchtigkeit" nach DIN EN ISO 6270-1, speziell im Gitterschnitt-Test, aufweisen.

### Darstellung der Erfindung

Aufgabe der vorliegenden Erfindung ist es daher, eine Korrosionsbeschichtungen basierend auf Alkydharzen zur Verfügung zu stellen, welche eine verbesserte Leistungsfähigkeit bei anspruchsvollen Korrosionstests auf Metallsubstraten aufweist, insbesondere in der "Beständigkeit gegen Salzsprühnebel" nach DIN EN ISO 9227 NSS oder in der "Beständigkeit gegen Feuchtigkeit" nach DIN EN ISO 6270-1, speziell im Gitterschnitt-Test.

Überraschenderweise wurde gefunden, dass eine Zusammensetzung nach Anspruch 1 diese Aufgabe löst.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Korrosionsschutzzusammensetzung umfassend:
- mindestens ein Alkydharz **AH,** bevorzugt ein Urethan-modifiziertes Alkydharz;
- mindestens ein Korrosionsschutzpigment **KP,** wobei es sich bei dem mindestens einen Korrosionsschutzpigment **KP**
   ∘ um mindestens ein plättchenförmiges Korrosionsschutzpigment **KPP,** insbesondere ausgewählt aus der Liste bestehend aus Eisenglimmer, Glimmer, Zink, Aluminium und Schichtsilikaten, insbesondere Talk und Kaolinit, und/oder
   ∘ um mindestens ein aktives Korrosionsschutzpigment **KPA** handelt;
- mindestens ein Trockenstoff,

Die Korrosionsschutzzusammensetzung enthält mindestens:
∘ Microsphären, und/oder
∘ Benzolkohlenwasserstoffharze, insbesondere Xylol-Formaldehydharze, bevorzugt Xylol-Formaldehydharze umgesetzt mit substituierten Phenolen.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.
Als "Raumtemperatur" wird eine Temperatur von 23°C bezeichnet.

Die Zusammensetzung umfasst mindestens ein Alkydharz **AH.**
Vorzugsweise handelt es sich um ein Alkydharz **AH** wie sie beschrieben sind unter dem Begriff "Alkydharze" in Römpp Chemie Lexikon, online-Version, Georg Thieme Verlag, abgerufen am 04 November 2018.

Vorzugsweise handelt es sich um Luft- und oxidativ trocknende Alkydharze, insbesondere Leinöl-, Sojaöl-, Safloröl- oder Ricinen-Alkydharze.

Die Alkydharze AH werden vorzugsweise aus mehrwertigen Alkoholen, mehrwertigen Carbonsäuren und ungesättigten Fettsäuren hergestellt.

Geeignete ungesättigten Fettsäuren sind beispielsweise Lauroleinsäure (Dodecensäure), Myristoleinsäure (Tetradecensäure), Palmitoleinsäure (Hexadecensäure), Ölsäure (Octadecensäure), Gadoleinsäure (Eicosensäure), Erucasäure (Docosensäure), Ricinolsäure (12-Hydroxy- octadecensäure), Linolsäure (Octadecensäure), Linolensaure (Octadecatriensäure), Elaeostearinsäure, Eicosapentensäure oder Docosahexaensäure, die in pflanzlichen und tierischen Ölen, wie Rizinusöl, dehydratisiertes Rizinusöl (Castor Oil), Kokosöl, Palmöl, Erdnussöl, Baumwollöl, Sojabohnenöl, Saffloröl, Sonnenblumenöl, OH- Sonnenblumenöl, Leinöl, erucareiches und erucaarmes Rüböl, Holzöl, Oiticaöl, Schmalz, Talg, Spermöl und Heringsöl.

Beispiele geeigneter mehrwertiger Alkohole sind Glyzerin, Pentaerythrit, Trimethylolethan und Trimethylolpropan.

Beispiele geeigneter mehrwertiger Carbonsäuren sind Phtalsäure, Isophtalsäure, Tetra- und Hexahydrophtalsäure, Methylendomethylen- und 3,6-Endomethylentetrahydrophtalsäure sowie die entsprechenden Anhydride dieser Säuren.

Das verwendete Öl bzw. die verwendete Fettsäure erlaubt eine Unterteilung nach dem Fettsäuretriacylglycerol-Gehalt (Ölgehalt, Öllänge) in kurzölige Alkydharze mit <40%, mittelölige Alkydharze mit 40-60% und langölige Alkydharze mit >60% Triacylglycerol, bezogen auf lösemittelfreies Alkydharz (Fettsäure-Gehalt ggf. in Triacylglycerol umrechnen, Faktor ca. 1,045). Vorzugsweise handelt es sich bei dem Alkydharz **AH** um ein langöliges Alkydharz.

Bevorzugt sind Alkydharze **AH** mit mindestens einer Modifizierungskomponente ausgewählt aus der Liste bestehend aus Naturharze, Phenolharze, Acrylatharze, Styrol, Epoxidharze, Siliconharze, Vinyltoluol und Isocyanaten, am meisten bevorzugt mit Isocyanaten.

Bei den vorgenannte Alkydharzen **AH** mit der Modifizierungskomponente Isocyanate handelt es sich vorzugsweise um Urethan-modifizierte Alkydharze. Bei den verwendeten Isocyanaten kann es sich um aliphatische Isocyanate, insbesondere Hexamethylendiisocyanat (HDI), Isophorondiisocyanat (IPDI) und Dicyclohexylmethandiisocyanat (H₁₂MDI) handeln.

Es kann sich bei den verwendeten Isocyanaten aber auch um aromatische Isocyanate, insbesondere Toluoldiisocyanat (TDI) oder Diphenylmethandiisocyanat (MDI), insbesondere MDI, handeln.
Vorzugsweise handelt es sich bei den verwendeten Isocyanaten um aromatische Isocyanate, besonders bevorzugt MDI.

Vorzugsweise handelt es sich um Alkydharzen **AH** welche löslich sind in organischen Lösungsmittel ausgewählt aus der Liste bestehend aus Testbenzin, Benzol, Toluol, Xylol, Ethylacetat, Butylacetat, Aceton, Methylethylketon und Cyclohexanon, insbesondere in Testbenzin, besonders bevorzugt entaromatisiertes Testbenzin gemäss DIN 51632-2: 2001-12.

Vorzugsweise beträgt der Anteil an Alkydharz **AH** 5 - 40 Gew.-%, 10 - 30 Gew.-%, 15 - 25 Gew.-%, insbesondere 20 - 25 Gew.-%, bezogen auf das Gesamtgewicht der Zusammensetzung.

Die Zusammensetzung umfasst mindestens ein Korrosionsschutzpigment **KP.** Bei diesem mindestens einen Korrosionsschutzpigment **KP** handelt es sich um mindestens ein plättchenförmiges Korrosionsschutzpigment **KPP** und/oder mindestens ein aktives Korrosionsschutzpigment **KPA.**

Umfasst die Zusammensetzung ein plättchenförmiges Korrosionsschutzpigment **KPP,** ist dieses insbesondere ausgewählt aus der Liste bestehend aus Eisenglimmer, Glimmer, Zink, Aluminium und Schichtsilikaten, insbesondere Talk und Kaolinit. Besonders bevorzugt handelt es sich um Eisenglimmer.

Die plättchenförmigen Korrosionsschutzpigmente haben vorzugsweise einen mittleren Durchmesser D₅₀ mit einem Bereich von 4 bis 35 µm, weiter bevorzugt von 4,5 bis 30 µm, noch weiter bevorzugt von 5 bis 25 µm.
Der D₅₀-Wert der Summenhäufigkeitsverteilung der erfindungsgemäßen Korrosionsschutzpigmente, wie sie durch Laserbeugungsmethoden erhalten wird, gibt an, dass 50% der Korrosionsschutzpigmente einen Durchmesser aufweisen, der gleich oder kleiner als der jeweils angegebene Wert ist. Die Größenverteilungskurve kann durch Laserdiffraktometrie bestimmt werden.

Für den Korrosionsschutz ist die Verwendung von plättchenförmigen Pigmenten von Vorteil, da plättchenförmige Pigmente im Unterschied zu Pigmenten mit sphärischen oder irregulären Geometrien eine Barrierewirkung nach Aufbringung auf dem gegen Korrosion zu schützenden Gegenstand aufweisen.

Vorzugsweise handelt es sich um plättchenförmigen Korrosionsschutzpigmente wie sie beschrieben sind unter dem Begriff "Korrosionschutzpigmente" in Römpp Chemie Lexikon, online-Version, Georg Thieme Verlag, abgerufen am 04 November 2018.

Vorzugsweise beträgt der Anteil an plättchenförmigen Korrosionsschutzpigmenten **KPP** 25 - 60 Gew.-%, 25 - 50 Gew.-%, 30 - 45 Gew.-%, insbesondere 35 - 40 Gew.-%, bezogen auf das Gesamtgewicht der Zusammensetzung.

Handelt es sich bei der Zusammensetzung um eine Zusammensetzung, welche als Deckbeschichtung eingesetzt wird, beträgt der Anteil an plättchenförmigen Korrosionsschutzpigmenten vorzugsweise 2 - 15 Gew.-%, 3 - 10 Gew.-%, insbesondere 3 - 8 Gew.-%, bezogen auf das Gesamtgewicht der Zusammensetzung, insbesondere wenn die Zusammensetzung Microsphären aufweist.

Umfasst die Zusammensetzung ein aktives Korrosionsschutzpigment **KPA,** ist dieses insbesondere ausgewählt aus der Liste bestehend aus Zinkstaub, Zinkoxid und Zinkphosphat. Besonders bevorzugt handelt es sich um Zinkoxid.

Vorzugsweise handelt es sich um aktives Korrosionsschutzpigment wie sie beschrieben sind unter dem Begriff "Korrosionschutzpigmente" in Römpp Chemie Lexikon, online-Version, Georg Thieme Verlag, abgerufen am 04 November 2018. Vorzugsweise beträgt der Anteil an aktivem Korrosionsschutzpigment **KPA** 2 - 20 Gew.-%, 4 - 15 Gew.-%, insbesondere 5 - 10 Gew.-%, bezogen auf das Gesamtgewicht der Zusammensetzung.

Besonders bevorzugt enthält die Zusammensetzung sowohl mindestens ein plättchenförmiges Korrosionsschutzpigment **KPP** als auch mindestens ein aktives Korrosionsschutzpigment **KPA.**

Die Zusammensetzung umfasst mindestens einen Trockenstoff. Vorzugsweise handelt es sich um ein Trockenstoff (auch Sikkativ genannt) wie sie beschrieben sind unter dem Begriff "Trockenstoffe" in Römpp Chemie Lexikon, online-Version, Georg Thieme Verlag, abgerufen am 04 November 2018.

Vorzugsweise handelt es sich um Trockenstoffe ausgewählt aus der Liste bestehend aus Salzen von Kobalt, Zirkonium, Kalzium, Zink, Eisen und Mangan und Mischungen daraus, insbesondere Salzen von Zirkonium und Eisen.

Vorzugsweise beträgt der Anteil an Trockenstoffen 0.1 - 3 Gew.-%, 0.3 - 2 Gew.-%, insbesondere 0.5 - 1.6 Gew.-%, bezogen auf das Gesamtgewicht der Zusammensetzung.

Die Zusammensetzung umfasst weiter Microsphären und/oder Benzolkohlenwasserstoffharze.

"Microsphären" im Sinne der vorliegenden Erfindung sind vorzugsweise Hohlkörper mit einem Hohlraumvolumen von mindestens 30%, insbesondere mindestens 50%, insbesondere mindestens 75% des Gesamtvolumens der einzelnen Microsphäre, welche in diesem Hohlraum mindestens ein Gas enthalten.
Der Ausdruck "mindestens ein Gas" umfasst reine Gase und Gasgemische aus zwei oder mehr Gasen.
Das mindestens eine Gas ist vorzugsweise ausgewählt aus Luft, Kohlendioxid, Sauerstoff, Stickstoff, Helium, Neon, Argon oder Xenon, beliebigen bei Zimmertemperatur gasförmigen organischen Verbindungen wie Kohlenwasserstoffen, oder auch halogenierten Kohlenwasserstoffen.
Bei Zimmertemperatur gasförmige Kohlenwasserstoffe sind vorzugsweise C1-C5-Kohlenwasserstoffe, welche verzweigt oder unverzweigt vorliegen (Methan bis Pentan). Besonders bevorzugt sind Luft, Isobutan und Isopentan, am meisten bevorzugt Isopentan.

Bevorzugt sind Microsphären, welche im Inneren einen einzigen mit Gas/Gasen gefüllten zentralen Hohlraum aufweisen.
Vorzugsweise handelt es sich um geschlossenporige Microsphären. Vorzugsweise handelt es sich um expandierte Microsphären.
Bevorzugte Materialien der Microsphären sind natürliche und synthetische, insbesondere synthetische, Polymere oder Copolymere, besonders bevorzugt synthetische Copolymere, am meisten bevorzugt Cyanacrylate und Polylactide.

Die Dichte der Microsphären beträgt vorzugsweise weniger als 100 kg/cm³. Besonders bevorzugt beträgt die Dichte der Microsphären zwischen 20 und 100 kg/cm³, höchst bevorzugt zwischen 20 und 50 kg/cm³.

Vorzugsweise weisen die Microsphären einen mittleren äusseren Durchmesser D(0.5) zwischen 10 und 100 µm, bevorzugt zwischen 20-85 µm, besonders bevorzugt zwischen 25-65 µm, auf.
Der Begriff "mittlerer äusserer Durchmesser" bezieht sich hier vorzugsweise auf den D(0.5) -Wert der kumulativen Volumenverteilungskurve, bei der 50 Vol.-% der Partikel einen Durchmesser aufweisen, der kleiner als der Wert ist. Der mittlere äussere Durchmesser oder der D(0.5)-Wert wird vorzugsweise durch Laserdiffraktometrie bestimmt.

Ein mittlerer äusserer Durchmesser D(0.5) von weniger als 10 µm ist dahingehend von Nachteil, dass dadurch eine signifikante Reduktion der Dichte der Zusammensetzung nicht mehr gewährleistet ist.
Ein mittlerer äusserer Durchmesser D(0.5) von mehr als 100 µm ist dahingehend von Nachteil, dass dadurch die Leistungsfähigkeit als Korrosionsbeschichtung aufgrund der Schichtdicken der Korrosionsbeschichtung abnimmt.

Im Handel erhältlich sind geeignete Microsphären beispielsweise unter dem Markennamen Expancel® der Firma AkzoNobel. Beispielhaft zu nennen sind hier Akzo Nobel Expancel® 920 DE 40, D30 sowie Expancel® 920 DET 40, D25.

Vorzugsweise beträgt der Anteil an Microsphären 0.05 - 1 Gew.-%, 0.1 - 0.5 Gew.-%, insbesondere 0.1 - 0.3 Gew.-%, bezogen auf das Gesamtgewicht der Zusammensetzung.

Ein Anteil von mehr als 1 Gew.-% ist dahingehend von Nachteil, dass die Korrosionsschutzwirkung abnimmt.

Weist die Zusammensetzung Microsphären auf ist dies insbesondere zur Reduktion des Verbrauchs vorteilhaft. In der Tabelle 2 ist beispielsweise unter Verbrauch [g/m²] (µm Schichtdicke trocken/nass) im Vergleich von Zusammensetzungen mit (E4-E6) und ohne Microsphären (E7-E9) ersichtlich, dass Zusammensetzungen ohne Microsphären einen signifikant höheren Verbrauch aufweisen, um eine Trockenschichtdicke von 80 µm zu erhalten.

Dieser Vorteil ist insbesondere dann besonders wichtig, wenn die erfindungsgemässe Zusammensetzung mindestens ein plättchenförmiges Korrosionsschutzpigment **KPP** aufweist. Dadurch weisen die erfindungsgemässen Zusammensetzungen eine hohe Dichte auf und führen somit einen hohen Flächenverbrauch [g/m²]. Überraschenderweise wurde nun gefunden, dass erfindungsgemässe Zusammensetzungen enthaltend mindestens ein plättchenförmiges Korrosionsschutzpigment **KPP** nicht nur genauso gute Korrosionsschutzwerte aufweist, sondern teilweise bessere Leistungen ermöglicht, und dies bei zusätzlich geringeren Flächenverbrauch.

Es kann daher vorteilhaft sein, wenn die Korrosionsschutzzusammensetzung mindestens ein plättchenförmiges Korrosionsschutzpigment **KPP** und Microsphären aufweist. Vorzugsweise umfasst die Korrosionsschutzzusammensetzung zusätzlich mindestens ein aktives Korrosionsschutzpigment **KPA.**

Microsphären werden im Stand der Technik auch in Wandfarben für den Innenraum, beispielsweise in Wohnräumen, eingesetzt und werden dort für ihre Eigenschaft zur Verbesserung der Wasserdampfdurchlässigkeit geschätzt. Dass der Einsatz solcher Microsphären in Korrosionsschutzzusammensetzungen, worin insbesondere die Sperrwirkung der plättchenförmigen Korrosionsschutzpigmente eine wichtige Rolle spielen kann, keinen nachteiligen Einfluss auf die Korrosionsschutzwirkung hat, sondern im Gegenteil die Korrosionsschutzwirkung verbessert, ist überraschend.

Wie vorgehend erwähnt erfüllen Zusammensetzungen/Systeme mit Microsphären trotz tieferer Dichte überraschenderweise die Anforderungen der Korrosionsschutzprüfungen genauso gut wie die Zusammensetzungen/Systeme ohne Microsphären. Dies zeigt beispielsweise der Vergleich der Tabellen 5 und 6, respektive Tabellen 7 und 8.
Überraschenderweise wurde weiter gefunden, dass die Verwendung von Microsphären zu einer Verbesserung der Gitterschnitt-Werte im Test "Beständigkeit gegen Salzsprühnebel" auf verzinktem Stahl (vorzugsweise gesweept) führt.
Überraschenderweise wurde auch gefunden, dass die Verwendung von Microsphären zu einer Verbesserung der Abreisswert-Werte und der Korrosion am Ritz-Werte im Test "Beständigkeit gegen Salzsprühnebel" auf Stahl (vorzugsweise gestrahlt) führt.
Weiter wurde überraschenderweise gefunden, dass die Verwendung von Microsphären zu einer Verbesserung des Abreisswerts nach 10 d Rekonditionierung im Test "Beständigkeit gegen Feuchtigkeit" auf Stahl (vorzugsweise gestrahlt) führt.

Bei dem Benzolkohlenwasserstoffharz handelt es sich vorzugsweise um Benzolkohlenwasserstoffharze wie sie beschrieben sind in Kittel, Lehrbuch der Lacke und Beschichtungen, Band 2, 2. Auflage 1998", in Kapitel 2.1.3 Benzolkohlenwasserstoffharze, Seite 99-100, S. Hirzel Verlag, Stuttgart.
Vorzugsweise handelt es sich um wasserunlösliche Benzolkohlenwasserstoffharze.
Vorzugsweise handelt es sich dabei um Umsetzungsprodukte von alkylierten Benzolen, insbesondere m-Xylol, mit einem Überschuss an Formaldehyd, insbesondere um Xylol-Formaldehydharze.
Solche Xylol-Formaldehydharze können beispielsweise mit Kolophonium umgesetzt, insbesondere verestert, werden oder mit substituierten Phenolen.

Besonders bevorzugt handelt es sich um Xylol-Formaldehydharze umgesetzt, insbesondere verestert, mit substituierten Phenolen.

Vorzugsweise beträgt der Anteil an Benzolkohlenwasserstoffharzen 0.1 - 1.5 Gew.-%, 0.2 - 1.2 Gew.-%, 0.2 - 1.0 Gew.-%, 0.2 - 0.8 Gew.-%, insbesondere 0.3 - 0.6 Gew.-%, bezogen auf das Gesamtgewicht der Zusammensetzung.

Ein solcher Anteil ist dahingehend von Vorteil, dass dadurch eine hohe Pendelhärten nach König, insbesondere im Bereich von 25 - 35 Sekunden, erhalten werden. Dies ist beispielsweise in der Tabelle 2 im Vergleich von E1, E2 und E3 ersichtlich.

Überraschenderweise wurde auch gefunden, dass die Verwendung von Benzolkohlenwasserstoffharzen zu einer Verbesserung der Gitterschnitt-Werte und der Abreisswerte im Test "Beständigkeit gegen Feuchtigkeit" und im Test "Beständigkeit gegen Salzsprühnebel" auf verzinktem Stahl (gesweept) führt.

Überraschenderweise wurde weiter gefunden, dass die Verwendung von Benzolkohlenwasserstoffharzen zu einer Verbesserung der Gitterschnitt-Werte und der Abreisswerte im Test "Beständigkeit gegen Feuchtigkeit" auf verzinktem Stahl (gewaschen) führt. Gewaschene Untergründe sind anspruchsvollere Oberflächen als gesweepte Untergründe.

Besonders bevorzugt weist die Korrosionsschutzzusammensetzung Microsphären und Benzolkohlenwasserstoffharze auf.

Die Zusammensetzung kann weiter Zusätze enthalten ausgewählt aus der Liste bestehend aus Entschäumern, Rheologieadditiven, Hautverhinderungsmitteln und Farbpigmenten.

Vorzugsweise beträgt der Anteil an Farbpigmenten 1 - 15 Gew.-%, 2 - 10 Gew.-%, 3 - 8 Gew.-%, insbesondere 3 - 5 Gew.-%, bezogen auf das Gesamtgewicht der Zusammensetzung.

Vorzugsweise enthält die Zusammensetzung weiter Füllstoffe. Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit oder PVC-Pulver.
Vorzugsweise beträgt der Anteil an Füllstoffen 2 - 30 Gew.-%, bezogen auf das Gesamtgewicht der Zusammensetzung.

Geeignete Lösemittel sind insbesondere ausgewählt aus der Liste bestehend aus Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Butylacetat, n-Butylpropionat, Diethylmalonat, 1-Methoxy-2-propylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Acetale wie insbesondere Methylal, Ethylal, Propylal, Butylal, 2-Ethylhexylal, Dioxolan, Glycerolformal oder 2,5,7,10-Tetraoxaundecan (TOU), sowie Toluol, Xylol, Heptan, Octan, Naphtha, White Spirit, Petrolether, Benzin, weiterhin Methylenchlorid, Propylencarbonat, Butyrolacton, N-Methylpyrrolidon oder N-Ethylpyrrolidon, insbesondere Butylacetat und Benzin, insbesondere Testbenzin, besonders bevorzugt entaromatisiertes Testbenzin gemäss DIN 51632-2: 2001-12.

Vorzugsweise beträgt der Anteil an Lösungsmittel 10 - 40 Gew.-%, 15 - 35 Gew.-%, insbesondere 18 - 30 Gew.-%, bezogen auf das Gesamtgewicht der Zusammensetzung.

Vorzugsweise weist die Zusammensetzung weniger als 5 Gew.-%, weniger als 2 Gew.-%, weniger als 1 Gew.-%, weniger als 0.5 Gew.-%, insbesondere weniger als 0.1 Gew-% Wasser auf, bezogen auf das Gesamtgewicht der Zusammensetzung.

Vorzugsweise besteht die Zusammensetzung zu mehr als 80 Gew.-%, mehr als 85 Gew.-%, mehr als 90 Gew.-%, mehr als 95 Gew.-%, mehr als 98 Gew.-%, mehr als 99 Gew.-%, mehr als 99,5 Gew.-%, insbesondere mehr als 99.9 Gew-%, bezogen auf das Gesamtgewicht der Zusammensetzung, aus:
- mindestens ein Alkydharz AH, bevorzugt ein Urethan-modifiziertes Alkydharz;
- mindestens ein Korrosionsschutzpigment KP, wobei es sich bei dem mindestens einen Korrosionsschutzpigment KP
   um mindestens ein plättchenförmiges Korrosionsschutzpigment KPP, insbesondere ausgewählt aus der Liste bestehend aus Eisenglimmer, Glimmer, Zink, Aluminium, Schichtsilikaten, insbesondere Talk und Kaolinit, und
   um mindestens ein aktives Korrosionsschutzpigment KPA handelt;
- mindestens einen Trockenstoff
- Microsphären
- Benzolkohlenwasserstoffharze, insbesondere Xylol-Formaldehydharze, bevorzugt Xylol-Formaldehydharze umgesetzt mit substituierten Phenolen,
- gegebenenfalls Lösungsmittel
- gegebenenfalls Füllstoffe
- gegebenenfalls Entschäumer, Rheologieadditive, Hautverhinderungsmittel und Farbpigmente.

Bei den vorgenannten Bestandteilen handelt es sich vorzugsweise um solche Varianten und Mengen, wie sie in der Beschreibung als bevorzugte Varianten und Mengen ausgeführt sind.

Die Zusammensetzung wird vorzugsweise in einem luftdichten Gebinde gelagert. Ein geeignetes Gebinde ist insbesondere ein Fass, ein Container, ein Hobbock, ein Eimer, eine Büchse, ein Beutel, ein Kanister oder eine Flasche. Die Zusammensetzung ist lagerstabil, das heisst, dass sie vor ihrer Anwendung während mehreren Monaten bis zu einem Jahr und länger im jeweiligen Gebinde aufbewahrt werden können, ohne dass sich ihre Eigenschaften in einem für ihren Gebrauch relevanten Ausmass verändern.
Durch Kontakt mit der Luft beginnt die Aushärtung durch oxidative Vernetzung an der Oberfläche der Zusammensetzung und ein Verdunsten der Lösungsmittel. Die Summe der beiden Vorgänge wird als Trocknung bezeichnet.

Weiterhin betrifft die Erfindung eine getrocknete Zusammensetzung, erhalten aus einer Zusammensetzung, wie sie vorhergehend beschrieben worden ist, nach der Trocknung der Zusammensetzung.

Bei der Applikation kann die Zusammensetzung als Beschichtung auf eine Fläche, beispielsweise eine ebene Fläche, geneigte Fläche oder auf eine Fläche über Kopf appliziert werden. Vorzugsweise wird die Zusammensetzung durch Spritzen appliziert, vorzugsweise mit einem Spritzdruck von mehr als 50 bar, insbesondere mehr als 100 bar. Sie kann jedoch auch appliziert werden, indem sie auf ein Substrat gegossen und anschliessend flächig bis zur erwünschten Schichtdicke verteilt wird, beispielsweise mittels einer Rolle, einer Bürste oder einem Pinsel.

In einem weiteren Aspekt betrifft die vorliegende Erfindung ein Verfahren zur Applikation der vorgehend genannten Zusammensetzung als Beschichtung auf ein Substrat. Vorzugsweise handelt es sich um die nachfolgend als bevorzugt aufgeführte Substrate

Im vorliegenden Dokument wird der Begriff "Beschichtung" sowohl für eine einzelne "Schicht" aus der aufgetragenen Zusammensetzung als auch für einen "Beschichtungsaufbau" (auch "Beschichtungssystem" oder "System" genannt) verwendet. Letzterer besteht aus einem oder mehrerer "Schichten". Ein solches "Beschichtungssystem" kann beispielsweise aus den folgenden drei "Schichten" bestehen; Grundierung, Zwischenbeschichtung und Deckbeschichtung (Top-coat).

Vorzugsweise weist eine Schicht eine Schichtdicke (Trockenschichtdicke) von 50-160 µm, 60-120 µm, insbesondere 80-100 µm, auf.

Vorzugsweise weist ein Beschichtungssystem eine Schichtdicke (Trockenschichtdicke) von 50-400 µm, 100-320 µm, insbesondere 200-240 µm, auf.

Ein weiterer Aspekt der Erfindung betrifft die Verwendung der erfindungsgemässen Korrosionsschutzzusammensetzung als Beschichtung, insbesondere als Grundierung (Primer), Zwischenbeschichtung und Deckbeschichtung (Top-Coat), insbesondere für Bau- und Industrieanwendungen.

Mögliche Verwendungen finden sich bei Fahrzeugen, Ladeflächen, Tanks, Silos, Schächten, Rohrleitungen, Pipelines, Maschinen oder Stahlkonstruktionen, beispielsweise von Piers, Windkraftanlagen, Brücken und Kranen, insbesondere bei Stahlkonstruktionen, bevorzugt Brücken.

Geeignete Substrate, welche mit der Zusammensetzung beschichtet werden können, sind insbesondere Metalle oder Legierungen wie Aluminium, Kupfer, Eisen, Stahl, Buntmetalle, inklusive oberflächenveredelte Metalle oder Legierungen wie verzinkte oder verchromte Metalle. Besonders bevorzugt handelt es sich um Stahl.

Vorzugsweise handelt es sich bei den vorgenannten Substraten, insbesondere Metallen oder Legierungen, um atmosphärisch belastete Substrate.
Unter dem Begriff "atmosphärisch belastet" werden vorzugsweise Substrate/Objekte verstanden, welche durch Luftverunreinigungen und die Witterung belastet werden.

Vorzugsweise handelt es sich nicht um Substrate/Objekte, welche einer Immersionsbelastung ausgesetzt sind, insbesondere durch Chemikalien (beispielsweise Innenbeschichtungen von Pipelines) oder Wasser (beispielsweise bei einer Spundwand).

Vorzugsweise handelt es sich bei den vorgehend erwähnten Substraten um Objekten ausgewählt aus der Liste bestehend Fahrzeugen, Ladeflächen, Tanks, Silos, Schächten, Rohrleitungen, Pipelines, Maschinen oder Stahlkonstruktionen, beispielsweise von Piers, Windkraftanlagen, Brücken und Kranen, insbesondere Stahlkonstruktionen, bevorzugt Brücken.

Die Substrate können bei Bedarf vor dem Applizieren vorbehandelt werden, insbesondere durch physikalische und/oder chemische Reinigungsverfahren.

Die Beschichtung ist insbesondere Bestandteil einer Korrosionsbeschichtung umfassend
- gegebenenfalls eine Grundierung,
- gegebenenfalls einer oder mehrerer Lagen einer Zwischenbeschichtung,
- und gegebenenfalls eine Deckbeschichtung (Top Coat).

Die erfindungsgemässe Korrosionsschutzzusammensetzung kann dabei die Grundierung und/oder die Zwischenbeschichtung und/oder die Deckbeschichtung der Korrosionsbeschichtung darstellen.

Besonders bevorzugt bestehen zwei, insbesondere alle der vorgenannten Schichten aus der erfindungsgemässen Korrosionsschutzzusammensetzung.

Bei den Schichten aus einer nicht-erfindungsgemässen Zusammensetzung kann es sich insbesondere um eine Zusammensetzung basierend auf einer Zusammensetzung ausgewählt aus der Liste bestehend aus Acrylatzusammensetzungen, Alkydharzen, Epoxyzusammensetzungen, Polyurethanzusammensetzungen und Polyharnstoffzusammsetzungen handeln.

Eine Grundierung wird aufgetragen, um den Untergrund zu benetzen, den Korrosionsschutz zu verbessern und eine Grundierung dient als Haftvermittler für oberliegende Schichten.

Vorzugsweise besteht die Korrosionsbeschichtung aus:
- einer Grundierung,
- einer oder mehrerer, insbesondere einer, Zwischenbeschichtung,
- einer Deckbeschichtung (Top Coat).
Besonders bevorzugt bestehen alle der vorgenannten Schichten aus der erfindungsgemässen Korrosionsschutzzusammensetzung

Aus der vorgenannten Verwendung der Korrosionsschutzzusammensetzung entsteht ein Artikel. Ein weiterer Gegenstand der Erfindung ist somit ein Artikel umfassend die getrocknete Zusammensetzung, erhalten aus der beschriebenen Verwendung. Vorzugsweise handelt es sich um ein vorgehend genanntes Objekt ausgewählt aus der Liste bestehend aus Fahrzeugen, Ladeflächen, Tanks, Silos, Schächten, Rohrleitungen, Pipelines, Maschinen oder Stahlkonstruktionen, beispielsweise von Piers, Windkraftanlagen, Brücken und Kranen, insbesondere Stahlkonstruktionen, bevorzugt Brücken.

Aus dem vorgehend genannten Verfahren oder aus der Applikation und Aushärtung der Zusammensetzung wird ein Artikel erhalten. In einem weiteren Aspekt betrifft die vorliegende Erfindung einen solchen Artikel. Vorzugsweise handelt es sich um ein vorgehend genanntes Objekt ausgewählt aus der Liste bestehend aus Fahrzeugen, Ladeflächen, Tanks, Silos, Schächten, Rohrleitungen, Pipelines, Maschinen oder Stahlkonstruktionen, beispielsweise von Piers, Windkraftanlagen, Brücken und Kranen, insbesondere Stahlkonstruktionen, bevorzugt Brücken.

Die erfindungsgemässe Zusammensetzung weist vorteilhafte Eigenschaften auf:
- Gitterschnitt-Werte und Abreisswerte im Test "Beständigkeit gegen Feuchtigkeit" und/oder im Test "Beständigkeit gegen Salzsprühnebel" auf verzinktem Stahl (gesweept) von ≤1, insbesondere 0, gemäss DIN EN ISO 9227 NSS, insbesondere wie sie im Beispielteil beschrieben.
- Gitterschnitt-Werte und der Abreisswerte im Test "Beständigkeit gegen Feuchtigkeit" auf verzinktem Stahl (gewaschen) von ≤1, insbesondere 0, gemäss DIN EN ISO 6270-1, insbesondere wie sie im Beispielteil beschrieben.
- Abreisswert-Werte und/oder der Korrosion am Ritz-Werte im Test "Beständigkeit gegen Salzsprühnebel" auf Stahl (vorzugsweise gestrahlt) von ≤1, insbesondere 0, gemäss DIN EN ISO 9227 NSS, insbesondere wie sie im Beispielteil beschrieben.

Pendelhärte nach König (DIN EN ISO 1522); ≥ 15, vorzugsweise 15 - 40, 20 - 40, insbesondere 25 - 35, insbesondere nach dem im Beispielteil beschriebenen Verfahren.

In einem weiteren Aspekt betrifft die Erfindung eine Verwendung von Microsphären in Korrosionsschutzzusammensetzungen, wie sie vorgehend erwähnt wurden, zur Verbesserung:
- der Gitterschnitt-Werte im Test "Beständigkeit gegen Salzsprühnebel" auf verzinktem Stahl (vorzugsweise gesweept); und/oder
- der Abreisswert-Werte und/oder der Korrosion am Ritz-Werte im Test "Beständigkeit gegen Salzsprühnebel" auf Stahl (vorzugsweise gestrahlt); und/oder
- des Abreisswerts nach 10 d Rekonditionierung im Test "Beständigkeit gegen Feuchtigkeit" auf Stahl (vorzugsweise gestrahlt).

Die Verbesserung bezieht sich auf den Vergleich zu einer vorgenannten Zusammensetzung, welche keine Microsphären aufweist.
Vorzugsweise handelt es sich bei den vorgenannten Tests um Testverfahren gemäss nach DIN EN ISO 6270-1, respektive DIN EN ISO 9227 NSS, insbesondere wie sie im Beispielteil beschrieben sind.

In einem weiteren Aspekt betrifft die Erfindung eine Verwendung von Benzolkohlenwasserstoffharzen in Korrosionsschutzzusammensetzungen, wie sie vorgehend erwähnt wurden, zur Verbesserung:
- der Gitterschnitt-Werte und der Abreisswerte im Test "Beständigkeit gegen Feuchtigkeit" und/oder im Test "Beständigkeit gegen Salzsprühnebel" auf verzinktem Stahl (gesweept); und/oder
- der Gitterschnitt-Werte und der Abreisswerte im Test "Beständigkeit gegen Feuchtigkeit" auf verzinktem Stahl (gewaschen).
Die Verbesserung bezieht sich auf den Vergleich zu einer vorgenannten Zusammensetzung, welche keine Benzolkohlenwasserstoffharze aufweist. Vorzugsweise handelt es sich bei den vorgenannten Tests um Testverfahren gemäss nach DIN EN ISO 6270-1, respektive DIN EN ISO 9227 NSS, insbesondere wie sie im Beispielteil beschrieben sind.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Verwendete Substanzen:

**Tabelle 1**

| | |
|---|---|
| Alkydharz | SYNTHALAT PL 754, langkettiges aromatisches Urethanalkydharz (MDI), 60%ig in entaromatisiertem Testbenzin, Synthopol (Deutsch land) |
| Benzolkohlenwasserstoffharz | Kondensationsprodukt aus substituierten Phenolen und Xylol-formaldehydharz, frei von Kolophonium, TUNGOPHEN B NV, (Allnex, Deutschland) |
| Trockenstoff | Mischung aus Zirkonium- und Eisenkomplexen, 30% Wirkstoffgehalt in entaromatisiertes Testbenzin |
| Lösungsmittel 1 | Butylacetat |
| Lösungsmittel 2 | Entaromatisiertes Testbenzin |
| Microsphären | EXPANCEL 920 DE 40D30, Microsphären, mittlerer äusserer Durchmesser D (0.5): 35-55 µm, Dichte 30 ± 3 kg/m³, Polymerhülle aus synthetischen Copolymeren, AkzoNobel |
| KPA, aktives Korrosionsschutzpigment | Zinkoxidpulver |
| KPP1, plättchenförmiges Korrosionsschutzpigment | EISENGLIMMER, MIOX SG, KÄRNTNER (Österreich) |
| KPP2, plättchenförmiges Korrosionsschutzpigment | Talkum, LUZENAC H1, mittlerer Durchmesser D50 : 9.3 µm, Imerys (Frankreich) |
| KPP3, plättchenförmiges Korrosionsschutzpigment | Muskovitglimmer, MICACELIA 125 L, Ziegler (Deutschland) |
| Füllstoff 1 | Gemisch aus korpuskularer Kieselsäure und lamellarem Kaolinit, SILLITIN Z 89, mittlerer Durchmesser D50 : 2.7 µm, Hoffmann Mineral (Deutschland) |
| Füllstoff 2 | Schwerspat (Bariumsulfat) ,PORTARYTE B15, mittlerer Durchmesser D50 : 2,0 µm, Sibelco (Belgien) |
| Entschäumeradditiv | Polysiloxan, BYK 065, Byk |
| Rheologieadditiv | Polyamid |
| Hautverhinderungsmittel | Aminoverbindung |
| Farbpigmente | Mischung aus Farbpigmenten |

### Herstellung von Alkydharz-Zusammensetzungen:

### Beispiele E1 - E9 sowie Ref.1:

Für jedes Beispiel wurden die in der Tabellen 1 angegebenen Inhaltsstoffe der Harz-Komponente in den in der Tabelle 2 angegebenen Mengen (in Gewichtsteilen) mittels eines Labordisolver (Disperlux IP yellow 075, Disperlux (Deutschland)) vermischt und luftdicht aufbewahrt.

Das mit "Ref.1" bezeichnete Beispiel ist ein Vergleichsbeispiel.
Die mit "E" bezeichneten Beispiele sind erfindungsgemässe Beispiele.

Bei den Zusammensetzungen E4 und E7 handelt es sich um Zusammensetzungen insbesondere geeignet als Grundierungen.
Bei den Zusammensetzungen E1-E3, E5 und E8 handelt es sich um Zusammensetzungen insbesondere geeignet als Zwischenbeschichtungen.
Bei den Zusammensetzungen E6 und E9 handelt es sich um Zusammensetzungen insbesondere geeignet als Deckbeschichtungen.

In der Tabelle 2 sind aus den Rubriken "Festkörper", "Nass-/Trockendichte" und "Verbrauch" die Einsparungen aufgrund der Microsphären ersichtlich.

Beispielsweise ist unter Verbrauch [g/m²] (µm Schichtdicke trocken/nass) im Vergleich von Zusammensetzungen mit (E4-E6) und ohne Microsphären (E7-E9) ersichtlich, dass Zusammensetzungen ohne Microsphären einen signifikant höheren Verbrauch aufweisen, um eine Trockenschichtdicke von 80 µm zu erhalten.

### Probenherstellung für Prüfungen der Pendelhärte nach König

Die Herstellung der Probenplatten (Glas) erfolgte gemäß den Vorgaben der DIN EN ISO 1522. Die Messung erfolgte nach einer Lagerung von 28 Tagen bei Normalklima (23°C, 50% Luftfeuchtigkeit) und einer Trockenschichtdicke von 80 µm. Besonders bevorzugte Werte liegen im Bereich von 25 - 35 Sekunden. Die Messwerte sind in der Tabelle 2 unter "Pendelhärte" ersichtlich.

**Tabelle 2, *in Gewichtsprozent**

| | **Ref.1** | **E1** | **E2** | **E3** | **E4** | **E5** | **E6** | **E7** | **E8** | **E9** |
|---|---|---|---|---|---|---|---|---|---|---|
| Alkydharz | 34.25 (20,55 fest) | 34.25 (20,55 fest) | 34.25 (20,55 fest) | 34.25 (20,55 fest) | 34.25 (20,55 fest) | 34.25 (20,55 fest) | 38.2 (22,92 fest) | 34.25 (20,55 fest) | 34.25 (20,55 fest) | 38.2 (22,92 fest) |
| Benzolkohlenwasserstoffharz | 0 | 0.5 | 0.75 | 1 | 0.5 | 0.5 | 0.5 | 0.5 | 0.5 | 0.5 |
| Trockenstoff | 2.36 | 2.36 | 2.36 | 2.36 | 2.36 | 2.36 | 2.52 | 2.36 | 2.36 | 2.52 |
| Lösungsmittel 1 | 5.68 | 5.18 | 4.93 | 4.68 | 3.45 | 4.93 | 4.18 | 3.45 | 4.93 | 4.18 |
| Lösungsmittel 2 | 6.36 | 6.36 | 6.36 | 6.36 | 4.62 | 6.36 | 5.3 | 4.62 | 6.36 | 5.3 |
| Mikrosphären | 0 | 0 | 0 | 0 | 0.25 | 0.25 | 0.25 | 0 | 0 | 0 |
| KPA | 8 | 8 | 8 | 8 | 8 | 8 | 8 | 8 | 8 | 8 |
| KPP 1 | 31 | 31 | 31 | 31 | 31 | 31 | | 31 | 31 | |
| KPP 2 | 6.15 | 6.15 | 6.15 | 6.15 | 6.15 | 6.15 | | 6.15 | 6.15 | |
| KPP 3 | | | | | | | 3.6 | | | 3.6 |
| Füllstoff 1 | | | | | | | 9.1 | | | 9.1 |
| Füllstoff 2 | | | | | 3.84 | | 17.01 | 3.84 | | 17.01 |
| Entschäumeradditiv | 0.48 | 0.48 | 0.48 | 0.48 | 0.48 | 0.48 | 1 | 0.48 | 0.48 | 1 |
| Rheologieadditiv | 0.5 | 0.5 | 0.5 | 0.5 | 0.5 | 0.5 | 0.8 | 0.5 | 0.5 | 0.8 |
| Hautverhinderungsmittel | 0.72 | 0.72 | 0.72 | 0.72 | 0.72 | 0.72 | 0.8 | 0.72 | 0.72 | 0.8 |
| Farbpigmente | 4.5 | 4.5 | 4.5 | 4.5 | 3.88 | 4.5 | 8.74 | 3.88 | 4.5 | 8.74 |
| Summe* | 100 | 100 | 100 | 100 | 100 | 100 | 100 | 100 | 100 | 100 |
| Festkörper [%], [Vol %] | n.d. | n.d. | n.d. | n.d. | 79,78/64,94 | 77,01/61,45 | 76,09/63,05 | 79,78/60,21 | 77,01/56,47 | 76,09/58,65 |
| Nass-/Trockendichte [g/ml] | n.d. | n.d. | n.d. | n.d. | 1,43 / 1,76 | 1,38 / 1,73 | 1,28 / 1,55 | 1,63 / 2,16 | 1,56 / 2,13 | 1,44 / 1,86 |
| Verbrauch [g/m²] (µm trocken/nass) | n.d. | n.d. | n.d. | n.d. | 177 (80/123) | 180 (80/131) | 163 (80/127) | 216 (80/133) | 221 (80/142) | 196 (80/136) |
| Pendelhärte [s] | 30 | 30 | 16 | 12 | n.d. | n.d. | n.d. | n.d. | n.d. | n.d. |

### Probenherstellung für Prüfungen im Trockenfilmzustand sowie Prüfverfahren im Trockenfilmzustand

Die Herstellung der Probenplatten erfolgte gemäß den Vorgaben der DIN EN ISO 12944-5. Die Trockenschichtdicke ("Gesamtschichtdicke") wurde nach sieben Tagen Konditionierung bei (23 ± 2)°C und (50 ± 5)% relativer Luftfeuchte nach DIN EN ISO 2808, Verfahren 7C, bestimmt.

Folgende Systemaufbauten wurden in die Beständigkeitsprüfungen gemäß DIN EN ISO 12944-5 einbezogen:
**System 1:** stückverzinkte Stahlbleche, gesweept Sollschichtdicke
   1 x E1 (100 µm)
   1 x E1 (100 µm)
**System 2:** stückverzinkte Stahlbleche, gesweept Sollschichtdicke
   1 x Ref.1 (100 µm)
   1 x Ref.1 (100 µm)
**System 3:** stückverzinkte Stahlbleche, gesweept Sollschichtdicke
   1 x E5 (100 µm)
   1 x E5 (100 µm)
**System 4:** stückverzinkte Stahlbleche, gewaschen Sollschichtdicke
   1 x E1 (100 µm)
   1 x E1 (100 µm)
**System 5:** stückverzinkte Stahlbleche, gewaschen Sollschichtdicke
   1 x Ref.1 (100 µm)
   1 x Ref.1 (100 µm)

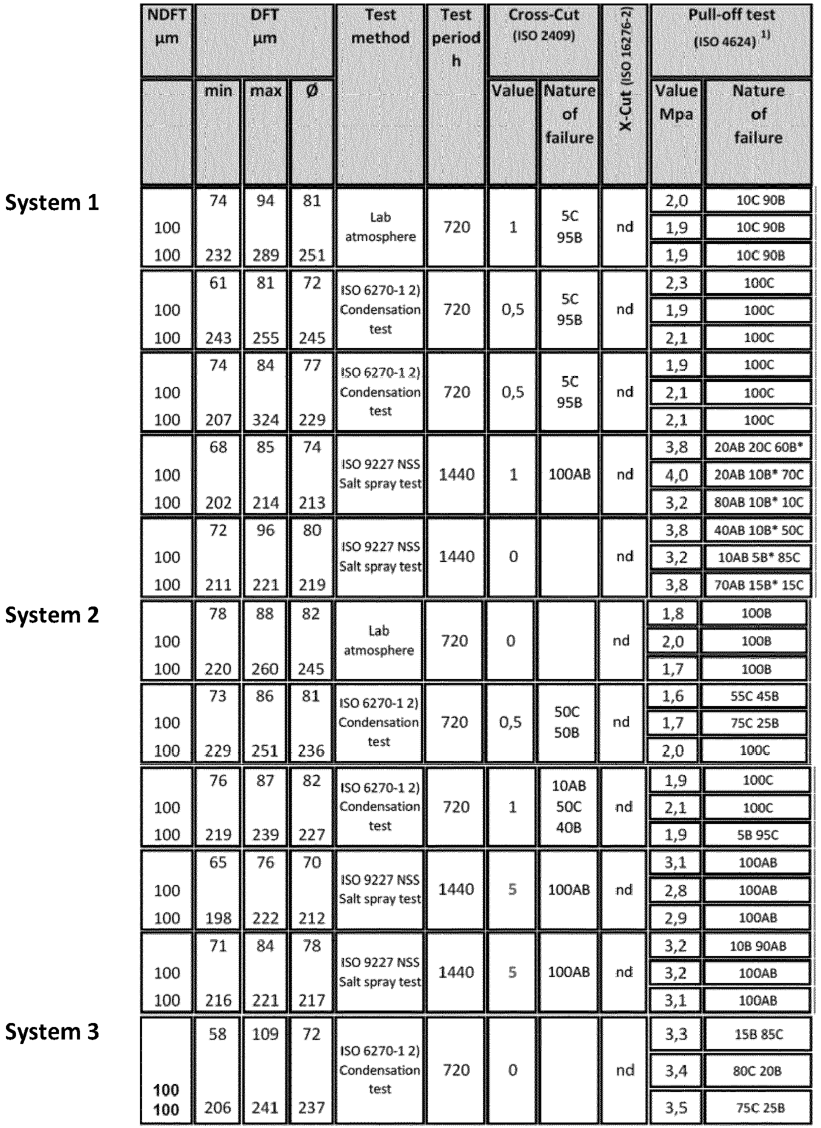

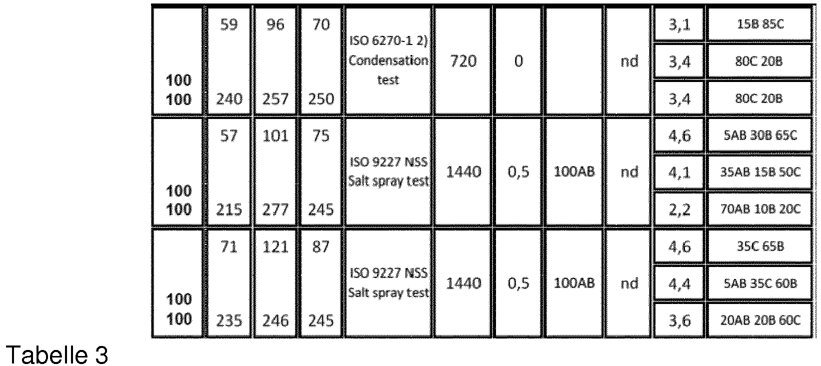

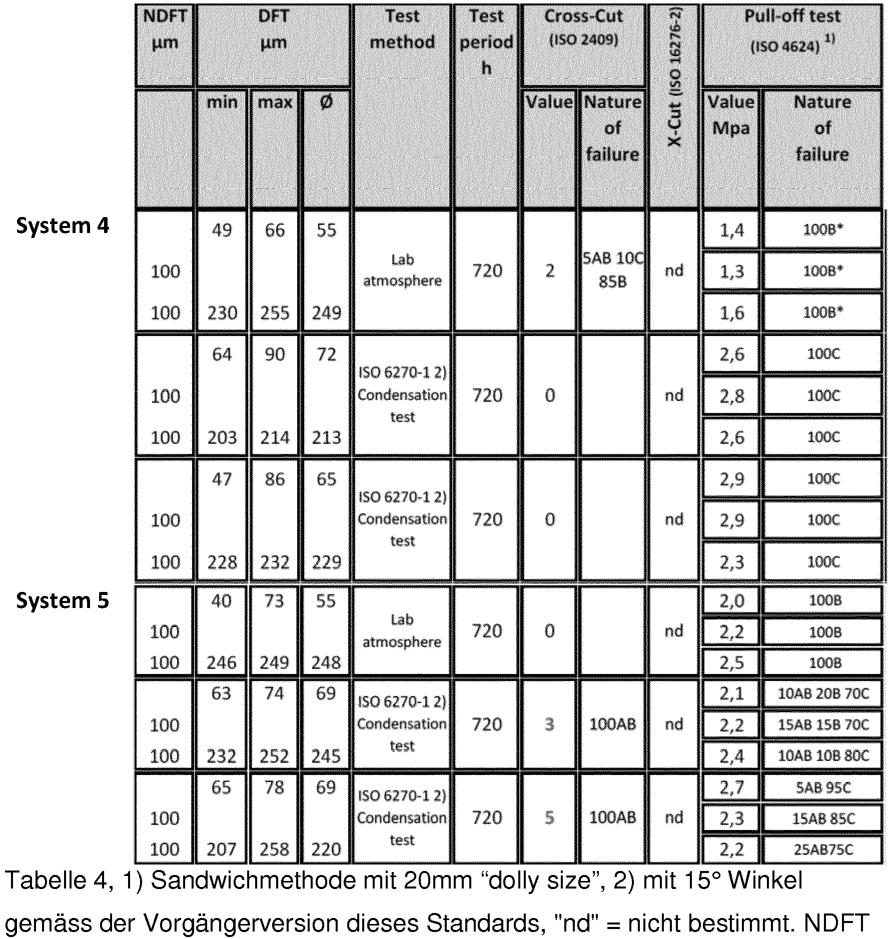

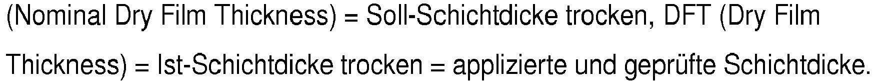

Der Vergleich der Systeme 1 - 3 in der Tabelle 3 zeigt die verbesserten Eigenschaften der erfindungsgemässen Zusammensetzungen/Systeme gegenüber der Referenzzusammensetzung Ref.1 auf gesweeptem stückverzinktem Stahlblech ("sweepen", Strahlen mit vermindertem Druck). Die Systeme 1 und 3 weisen bessere Werte für den Gitterschnitt ("Cross-Cut", Wert ("Value") sowie Bruchbild ("Nature of failure") und den Abreisswert ("Pull-off test", Wert ("Value") sowie Bruchbild ("Nature of failure") auf. Dies sowohl für den Test "Beständigkeit gegen Feuchtigkeit" nach ISO 6270-1 ("Condensation test") als auch für den Test "Beständigkeit gegen Salzsprühnebel" nach DIN EN ISO 9227 NSS ("Salt spray test", "NSS" für "neutraler Salzsprühnebel"). Die Werte von System 3 sind sogar in allen vorgehend erwähnten Bereichen denjenigen von System 1 überlegen.

Auch auf gewaschenem (SikaCor® Wash, Sika Deutschland) stückverzinktem Stahlblech zeigt der Vergleich der Systeme 4 und 5 im Test "Beständigkeit gegen Feuchtigkeit" in der Tabelle 4 die verbesserten Eigenschaften der erfindungsgemässen Zusammensetzungen/Systeme gegenüber der Referenzzusammensetzung Ref.1.
Das System 4 erreicht bessere Werte für den Gitterschnitt ("Cross-Cut") und den Abreisswert ("Pull-off test", Wert ("Value") sowie Bruchbild ("Nature of failure").
**System 6:** Stahlbleche, handentrostet Sollschichtdicke
   1 x E4 (80 µm)
   1 x E5 (80 µm)
   1 x E6 (80 µm)
   ermittelte Gesamtschichtdicke: (243 ± 10) µm
**System 7:** Stahlbleche, gestrahlt Sollschichtdicke
   1 x E4 (80 µm)
   1 x E5 (100 µm)
   1 x E6 (100 µm)
   ermittelte Gesamtschichtdicke: (285 ± 15) µm
**System 8:** stückverzinkte Stahlbleche, gesweept Sollschichtdicke
   1 x E5 (100 µm)
   1 x E5 (100 µm)
   ermittelte Gesamtschichtdicke: (223 ± 10) µm
**System 9:** Stahlbleche, handentrostet Sollschichtdicke
   1 x E7 (80 µm)
   1 x E8 (80 µm)
   1 x E9 (80 µm)
   ermittelte Gesamtschichtdicke: (233 ± 10) µm
**System 10:** Stahlbleche, gestrahlt Sollschichtdicke
   1 x E7 (80 µm)
   1 x E8 (100 µm)
   1 x E9 (100 µm)
   ermittelte Gesamtschichtdicke: (285 ± 11) µm
**System 11:** stückverzinkte Stahlbleche, gesweept Sollschichtdicke
   1 x E8 (100 µm)
   1 x E8 (100 µm)
   ermittelte Gesamtschichtdicke: (212 ± 10) µm

### Beständigkeit gegen Feuchtigkeit (kontinuierliche Kondensation)

Prüfverfahren: Prüfung nach DIN EN ISO 6270-1
Belastungsdauer: 240 h (System 1) 480 h (System 2) 720 h (System 3)

**Tabelle 5: Prüfergebnisse Feuchtigkeitsbeständigkeit**

| Parameter (Bewertungsverfahren) | **Soll** | **System 6** | **System 7** | **System 8** |
|---|---|---|---|---|
| (DIN EN ISO 4628-2) | 0 (S0) | 0 (S0) | 0 (S0) | 0 (S0) |
| Rostgrad (DIN EN ISO 4628-3) | Ri 0 | Ri 0 | Ri 0 | Ri 0 |
| Rißgrad (DIN EN ISO 4628-4) | 0 (S0) | 0 (S0) | 0 (S0) | 0 (S0) |
| Abblätterungsgrad (DIN EN ISO 4628-5) | 0 (S0) | 0 (S0) | 0 (S0) | 0 (S0) |
| Naßhaftfestigkeit durch Kreuzschnitt* (DIN EN ISO 16276-2) | ≤ 1 | - | - | 0 |
| Gitterschnitt* (DIN EN ISO 2409) | ≤ 1 | 0 | - | 0-1 |
| Kreuzschnitt* (DIN EN ISO 16276-2) | ≤ 1 | - | 0 | - |
| Abreißwert (DIN EN ISO 4624) | ≥ 3 MPa | - | 2,3MPa | - |
| - nach 24 h Lagerung bei NK | - | - | 4,4MPa | - |
| - nach 10 d Rekonditionierung | | | | |

**Tabelle 6: Prüfergebnisse Feuchtigkeitsbeständigkeit**

| Parameter (Bewertungsverfahren) | **Soll** | **System 9** | **System 10** | **System 11** |
|---|---|---|---|---|
| Blasengrad (DIN EN ISO 4628-2) | 0 (S0) | 0 (S0) | 0 (S0) | 0 (S0) |
| Rostgrad (DIN EN ISO 4628-3) | Ri 0 | Ri 0 | Ri 0 | Ri 0 |
| Rißgrad (DIN EN ISO 4628-4) | 0 (S0) | 0 (S0) | 0 (S0) | 0 (S0) |
| Abblätterungsgrad (DIN EN ISO 4628-5) | 0 (S0) | 0 (S0) | 0 (S0) | 0 (S0) |
| Naßhaftfestigkeit durch Kreuzschnitt* (DIN EN ISO 16276-2) | ≤ 1 | - | - | 0 |
| Gitterschnitt* (DIN EN ISO 2409) | ≤ 1 | 0 | - | 0 |
| Kreuzsch nitt* (DIN EN ISO 16276-2) | ≤ 1 | - | 0 | - |
| Abreißwert (DIN EN ISO 4624) | ≥ 3 MPa | - | 2,5MPa | - |
| - nach 24 h Lagerung bei NK | - | - | 3,5MPa | |
| - nach 10 d Rekonditionierung | | | | |

### Beständigkeit gegen Salzsprühnebel

Prüfverfahren: Prüfung nach DIN EN ISO 9227 NSS
Belastungsdauer: 480 h (System 1) 720 h (System 2) 1440 h (System 3)

**Tabelle 7: Prüfergebnisse Salzsprühnebelbeständigkeit, * verwendetes Klebeband: Tesaband 4651**

| Parameter (Bewertungsverfahren) | Soll | System 6 | System 7 | System 8 |
|---|---|---|---|---|
| Blasengrad (DIN EN ISO 4628-2) | 0 (S0) | 0 (S0) | 0 (S0) | 0 (S0) |
| Rostgrad (DIN EN ISO 4628-3) | Ri 0 | Ri 0 | Ri 0 | Ri 0 |
| Rißgrad (DIN EN ISO 4628-4) | 0 (S0) | 0 (S0) | 0 (S0) | 0 (S0) |
| Abblätterungsgrad (DIN EN ISO 4628-5) | 0 (S0) | 0 (S0) | 0 (S0) | 0 (S0) |
| Gitterschnitt* (DIN EN ISO 2409) | ≤ 1 | 0 | - | 0-1 |
| Kreuzschnitt* (DIN EN ISO 16276-2) | ≤ 1 | - | 0 | - |
| Abreißwert (DIN EN ISO 4624) | ≥ 3 MPa | - | 6,6 MPa | - |
| Korrosion am Ritz (DIN EN ISO 4628-8) | ≤ 3 mm | - | 2,0 mm | - |

**Tabelle 8: Prüfergebnisse Salzsprühnebelbeständigkeit, * verwendetes Klebeband: Tesaband 4651**

| Parameter (Bewertungsverfahren) | Soll | System 9 | System 10 | System 11 |
|---|---|---|---|---|
| Blasengrad (DIN EN ISO 4628-2) | 0 (S0) | 0 (S0) | 0 (S0) | 0 (S0) |
| Rostgrad (DIN EN ISO 4628-3) | Ri 0 | Ri 0 | Ri 0 | Ri 0 |
| Rißgrad (DIN EN ISO 4628-4) | 0 (S0) | 0 (S0) | 0 (S0) | 0 (S0) |
| Abblätterungsgrad (DIN EN ISO 4628-5) | 0 (S0) | 0 (S0) | 0 (S0) | 0 (S0) |
| Gitterschnitt* (DIN EN ISO 2409) | ≤ 1 | 0 | - | 3-4 |
| Kreuzschnitt* (DIN EN ISO 16276-2) | ≤ 1 | - | 0 | - |
| Abreißwert (DIN EN ISO 4624) | ≥ 3 MPa | - | 5,7 MPa | - |
| Korrosion am Ritz (DIN EN ISO 4628-8) | ≤ 3 mm | - | 1,5 mm | - |

Der Vergleich der Tabellen 5 und 6, respektive Tabellen 7 und 8, zeigt, dass die Performance der Zusammensetzungen/Systeme mit Microsphären trotz tieferer Dichte die Anforderungen erfüllt und daher dieselben Eigenschaften wie die Zusammensetzungen/Systeme ohne Microsphären erreichen. Weiter zeigt das erfindungsgemässe System überraschenderweise eine stark verbesserte Performance in System 8 der Tabelle 7 vs. System 11 in der Tabelle 8 bezüglich dem Gitterschnitt (Beständigkeit gegen Salzsprühnebel, (Gitterschnitt (DIN EN ISO 2409)), 0-1 vs. 3-4).

Auch zeigt das System enthaltend Microsphären überraschenderweise eine verbesserte Performance in System 7 der Tabelle 7 vs. System 10 in der Tabelle 8 bezüglich dem Abreisswert (Beständigkeit gegen Salzsprühnebel, (Abreißwert (DIN EN ISO 4624)), 6,6 vs. 5,7) sowie der Korrosion am Ritz (Korrosion am Ritz (DIN EN ISO 4628-8)), 2,0 mm vs. 1,5 mm).

Zusätzlich zeigt das System enthaltend Microsphären überraschenderweise eine verbesserte Performance in System 7 der Tabelle 5 vs. System 10 in der Tabelle 6 bezüglich dem Abreisswert nach 10 d Rekonditionierung (Beständigkeit gegen Feuchtigkeit, (Abreißwert (DIN EN ISO 4624)), 4.4 vs. 3.5).

## Patentansprüche

1. Korrosionsschutzzusammensetzung umfassend
- mindestens ein Alkydharz **AH,** bevorzugt ein Urethan-modifiziertes Alkydharz;
- mindestens ein Korrosionsschutzpigment **KP,** wobei es sich bei dem mindestens einen Korrosionsschutzpigment **KP**
∘ um mindestens ein plättchenförmiges Korrosionsschutzpigment **KPP,** insbesondere ausgewählt aus der Liste bestehend aus Eisenglimmer, Glimmer, Zink, Aluminium und Schichtsilikaten, insbesondere Talk und Kaolinit, und/oder
∘ um mindestens ein aktives Korrosionsschutzpigment **KPA** handelt;
- mindestens einen Trockenstoff,
- wobei die Korrosionsschutzzusammensetzung weiter
∘ Microsphären, und/oder
∘ Benzolkohlenwasserstoffharze, insbesondere Xylol-Formaldehydharze, bevorzugt Xylol-Formaldehydharze umgesetzt mit substituierten Phenolen, enthält.

2. Zusammensetzung gemäss Anspruch 1, **dadurch gekennzeichnet, dass** es sich bei dem mindestens einen Alkydharz **AH** um ein Urethan-modifiziertes Alkydharz handelt, insbesondere handelt es sich bei den verwendeten Isocyanaten um aromatische Isocyanate, bevorzugt um Toluoldiisocyanat (TDI) oder Diphenylmethandiisocyanat (MDI), am meisten bevorzugt um MDI.

3. Zusammensetzung gemäss einem der vorhergehenden Ansprüche, **dadurch gekennzeichnet, dass** der Anteil an Alkydharz **AH** 5 - 40 Gew.-%, 10 - 30 Gew.-%, 15 - 25 Gew.-%, insbesondere 20 - 25 Gew.-%, bezogen auf das Gesamtgewicht der Zusammensetzung, beträgt.

4. Zusammensetzung gemäss einem der vorhergehenden Ansprüche, **dadurch gekennzeichnet, dass** der Anteil an plättchenförmigen Korrosionsschutzpigmenten **KPP** 25 - 60 Gew.-%, 25 - 50 Gew.-%, 30 - 45 Gew.-%, insbesondere 35 - 40 Gew.-%, bezogen auf das Gesamtgewicht der Zusammensetzung, beträgt.

5. Zusammensetzung gemäss einem der vorhergehenden Ansprüche, **dadurch gekennzeichnet, dass** der Anteil an aktivem Korrosionsschutzpigment **KPA** 2 - 20 Gew.-%, 4 - 15 Gew.-%, insbesondere 5 - 10 Gew.-%, bezogen auf das Gesamtgewicht der Zusammensetzung, beträgt.

6. Zusammensetzung gemäss einem der vorhergehenden Ansprüche, **dadurch gekennzeichnet, dass** die Zusammensetzung sowohl mindestens ein plättchenförmiges Korrosionsschutzpigment **KPP** als auch mindestens ein aktives Korrosionsschutzpigment **KPA,** enthält.

7. Zusammensetzung gemäss einem der vorhergehenden Ansprüche, **dadurch gekennzeichnet, dass** die Microsphären einen mittleren äusseren Durchmesser D (0.5) zwischen 10 und 100 µm, bevorzugt zwischen 20-85 µm, besonders bevorzugt zwischen 25-65 µm, aufweisen.

8. Zusammensetzung gemäss einem der vorhergehenden Ansprüche, **dadurch gekennzeichnet, dass** der Anteil an Microsphären 0.05 - 1 Gew.-%, 0.1 - 0.5 Gew.-%, insbesondere 0.1 - 0.3 Gew.-%, bezogen auf das Gesamtgewicht der Zusammensetzung, beträgt.

9. Zusammensetzung gemäss einem der vorhergehenden Ansprüche, **dadurch gekennzeichnet, dass** die Korrosionsschutzzusammensetzung mindestens ein plättchenförmiges Korrosionsschutzpigment **KPP** und Microsphären aufweist.

10. Zusammensetzung gemäss einem der vorhergehenden Ansprüche, **dadurch gekennzeichnet, dass** es sich bei dem Benzolkohlenwasserstoffharz um Xylol-Formaldehydharze umgesetzt mit substituierten Phenolen, handelt.

11. Zusammensetzung gemäss einem der vorhergehenden Ansprüche, **dadurch gekennzeichnet, dass** beträgt der Anteil an Benzolkohlenwasserstoffharzen 0.1 - 1.5 Gew.-%, 0.2 - 1.2 Gew.-%, 0.2 - 1.0 Gew.-%, 0.2 - 0.8 Gew.-%, insbesondere 0.3 - 0.6 Gew.-%, bezogen auf das Gesamtgewicht der Zusammensetzung, beträgt.

12. Zusammensetzung gemäss einem der vorhergehenden Ansprüche, **dadurch gekennzeichnet, dass** die Korrosionsschutzzusammensetzung Microsphären und Benzolkohlenwasserstoffharze aufweist.

13. Zusammensetzung gemäss einem der vorhergehenden Ansprüche, **dadurch gekennzeichnet, dass** die Zusammensetzung weniger als 5 Gew.-%, weniger als 2 Gew.-%, weniger als 1 Gew.-%, weniger als 0.5 Gew.-%, insbesondere weniger als 0.1 Gew-% Wasser, bezogen auf das Gesamtgewicht der Zusammensetzung, aufweist.

14. Verwendung einer Zusammensetzung gemäss einem der Ansprüche 1 bis 13 als Beschichtung, insbesondere als Grundierung (Primer), Zwischenbeschichtung und Deckbeschichtung (Top-Coat), insbesondere für Bau- und Industrieanwendungen.

15. Verfahren zur Applikation der Zusammensetzung Ansprüche 1 bis 13 als Beschichtung auf ein Substrat, insbesondere handelt es sich bei dem Substrat um Stahl.

16. Artikel erhalten aus einem einer Verwendung gemäss Anspruch 14 oder einem Verfahren gemäss Anspruch 15.

17. Verwendung von Microsphären in Korrosionsschutzzusammensetzungen, wie sie in den Ansprüchen 1 bis 13 beschrieben sind, zur Verbesserung:
- der Gitterschnitt-Werte im Test "Beständigkeit gegen Salzsprühnebel" auf verzinktem Stahl (vorzugsweise gesweept); und/oder
- der Abreisswert-Werte und/oder der Korrosion am Ritz-Werte im Test "Beständigkeit gegen Salzsprühnebel" auf Stahl (vorzugsweise gestrahlt); und/oder
- des Abreisswerts nach 10 d Rekonditionierung im Test "Beständigkeit gegen Feuchtigkeit" auf Stahl (vorzugsweise gestrahlt),
wobei es sich bei den vorgenannten Tests um Testverfahren gemäss DIN EN ISO 6270-1, respektive DIN EN ISO 9227 NSS, handelt.

18. Verwendung von Benzolkohlenwasserstoffharzen in Korrosionsschutzzusammensetzungen, wie sie in den Ansprüchen 1 bis 13 beschrieben sind, zur Verbesserung:
- der Gitterschnitt-Werte und der Abreisswerte im Test "Beständigkeit gegen Feuchtigkeit" und/oder im Test "Beständigkeit gegen Salzsprühnebel" auf verzinktem Stahl (gesweept); und/oder
- der Gitterschnitt-Werte und der Abreisswerte im Test "Beständigkeit gegen Feuchtigkeit" auf verzinktem Stahl (gewaschen), wobei es sich bei den vorgenannten Tests um Testverfahren gemäss DIN EN ISO 6270-1, respektive DIN EN ISO 9227 NSS, handelt.
